# FASCICULE DE BREVET EUROPEEN

(11) **EP 3 712 482 B1**
(45) Date de publication et mention de la délivrance du brevet: **29.11.2023**
(21) Numéro de dépôt: 20163328.6
(22) Date de dépôt: 16.03.2020
(51) Int. Cl.: F16L 11/02, F16L 11/24, B65H 18/10, F16C 13/00, F24F 13/02, F24F 13/068

(54) **PROCEDE DE CONFECTION D'UNE GAINE SOUPLE DE VENTILATION**
HERSTELLUNGSVERFAHREN EINES FLEXIBLEN ENTLÜFTUNGSKANALS
METHOD FOR PRODUCING A FLEXIBLE VENTILATION DUCT

(30) Priorité: 19.03.2019 FR 1902823
(43) Date de publication de la demande: 23.09.2020
(73) Titulaire: Augusta, 44118 La Chevroliere (FR)
(72) Inventeur: LALLE, Yves-Marie, 44118 La Chevroliere (FR)
(74) Mandataire: Cabinet Le Guen Maillet

(56) Documents cités:
- WO-A1-97/40984
- WO-A1-03/023269
- WO-A2-2013/067172
- AU-B2- 598 482
- DE-A1- 3 722 393
- DE-A1- 10 245 350
- FR-A1- 2 205 402

## Description

La présente invention concerne un procédé de fabrication d'une gaine souple de ventilation.

Pour fabriquer une gaine souple de ventilation destinée à être utilisée dans le domaine de la ventilation contrôlée, il est connu d'utiliser deux bandes de tissu synthétique de relativement grande longueur et que l'on assemble par j onction de leurs bords longitudinaux pour que la gaine puisse former en section une boucle.

L'assemblage est réalisé par l'intermédiaire d'une paire de bandes velcro ^{®} ou d'une fermeture à glissière dont les deux constituants sont respectivement fixés sur un bord gauche d'une première bande de tissu et sur un bord droit d'une seconde bande de tissu. On répète l'opération pour les deux autres bords. Cette invention est présentée dans le brevet US-A1-2011269390. La longueur des bandes définit ainsi la longueur d'une gaine de ventilation. Pour constituer une gaine de ventilation de grande longueur ou d'une longueur particulière, on aboute à suivre deux ou un nombre plus important de gaines, par exemple à l'aide d'une fermeture à glissière.

On connaît encore à la lecture du document WO-A1-97/40984, un procédé de fabrication d'une bande de matériau de type tuyau, une bande ainsi formée et une utilisation de ladite bande.

Le procédé consiste à fabriquer une bande de matériau de type tuyau en utilisant au moins deux bandes de matériau provenant d'au moins deux rouleaux de matériau. On enroule ensuite en spirale au moins l'un desdits rouleaux de matériau, à l'aide d'un mécanisme d'enroulement, autour d'un mandrin, lesdites bandes de matériau étant attachées les unes aux autres pour fournir la bande de matériau de type tuyau. Les rouleaux de matériau sont constitués de bandes de matériau multicouche, lesdites bandes comportant au moins une couche superficielle externe d'un premier matériau étanche et au moins une couche superficielle interne d'un second matériau. Le premier rouleau tourne en hélicoïde autour du mandrin et le second rouleau tourne en hélicoïde, mais en sens inverse, autour du mandrin.

Les bandes de matériau multicouche sont enroulées en continu autour du mandrin de manière à former une bande continue et fermée de matériau de type tuyau.

La surface extérieure des bandes est faite d'une polyoléfine et sa surface intérieure est faite d'un polymère adhésif. Les surfaces adhésives en polymère adhèrent bien les unes aux autres, de sorte que la surface externe forme une surface externe étanche.

Une bande est refermée longitudinalement autour du tuyau puis assemblée par une couture.

Connaissant cet état de l'art, le demandeur a cherché une solution industrielle plus simple à mettre en oeuvre pour confectionner des gaines souples destinées, notamment, à la ventilation d'usines, de magasins, de sites destinés à accueillir du public.

A cet effet, est proposé un procédé de confection d'une gaine souple de ventilation selon la revendication 1.

Ce mode opératoire de fabrication d'une gaine souple de ventilation permet de la confectionner en continu. La laize forme un hélicoïde qui constitue la paroi tubulaire de la gaine souple de ventilation.

Les deux bords superposés de la laize sont assemblés de manière étanche. La gaine ainsi fabriquée est ensuite enroulée en continu autour du mandrin, par l'intermédiaire du moyen de déplacement en translation.

Le procédé consiste à coudre les deux bords superposés.

Les deux bords superposés de la laize constitutive de la gaine souple de ventilation sont parfaitement réunis par la couture.

Selon une caractéristique additionnelle de l'invention, le procédé consiste, préalablement à la confection de la gaine de ventilation, à perforer au moins une épaisseur du textile de la laize ou à découper un trou sur au moins une épaisseur du textile de la laize.

La gaine souple de ventilation ainsi conçue est apte à pouvoir diffuser de l'air.

Selon une caractéristique additionnelle de l'invention, le procédé consiste, préalablement à la confection de la gaine de ventilation, à réaliser un marquage sur la laize.

La laize est porteuse d'un marquage servant notamment à son identification.

Selon une caractéristique additionnelle de l'invention, le procédé consiste, préalablement à sa confection, à fixer des accessoires sur la laize.

Les accessoires sont utilisés notamment pour suspendre la gaine de ventilation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig 1] représente une vue en perspective d'une gaine souple de ventilation fabriquée selon l'invention,
[Fig 2] représente une vue latérale d'une gaine souple de ventilation fabriquée selon l'invention,
[Fig 3] représente une vue latérale en coupe d'une machine pour confectionner une gaine souple de ventilation fabriquée selon l'invention,
[Fig 4] représente une vue de dessus d'une machine pour confectionner une gaine souple de ventilation fabriquée selon l'invention,
[Fig 5] représente une vue en coupe d'un point de couture unissant les deux bords à recouvrement d'une laize dans la construction d'une gaine de ventilation fabriquée selon l'invention et,
[Fig.-6] représente une vue d'un détail agrandi d'une machine pour confectionner une gaine souple de ventilation fabriquée selon l'invention.

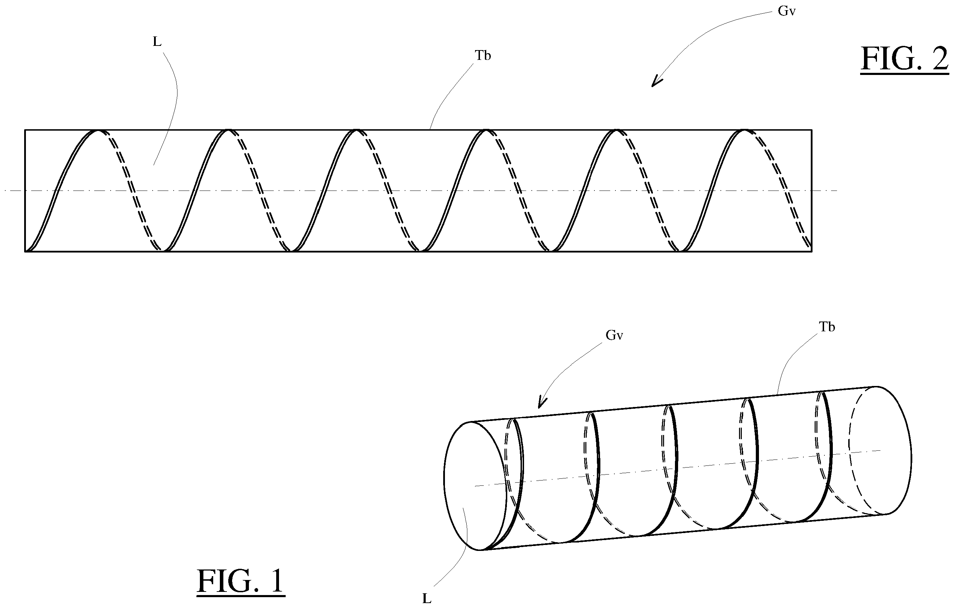

La gaine souple de ventilation Gv présentée sur la Fig. 1 est destinée à transporter un flux d'air, entre une centrale de diffusion d'air et un local industriel ou commercial. Elle est composée d'une paroi tubulaire Tb souple. La paroi est faite d'un textile, par exemple un tissu synthétique. La gaine souple de ventilation Gv convient pour transporter de l'air, disperser de l'air, dans un système de ventilation contrôlée, incluant le renouvellement de l'air ambiant, la réfrigération de l'air ambiant ou la climatisation de l'air ambiant.

La paroi tubulaire Tb est fabriquée par enroulement d'une laize L qui forme un hélicoïde dans ladite paroi tubulaire ainsi construite. La paroi tubulaire Tb est à considérer pendant le fonctionnement de la gaine souple de ventilation, c'est-à-dire lorsqu'elle transporte un flux d'air à une pression positive légèrement supérieure à la pression atmosphérique.

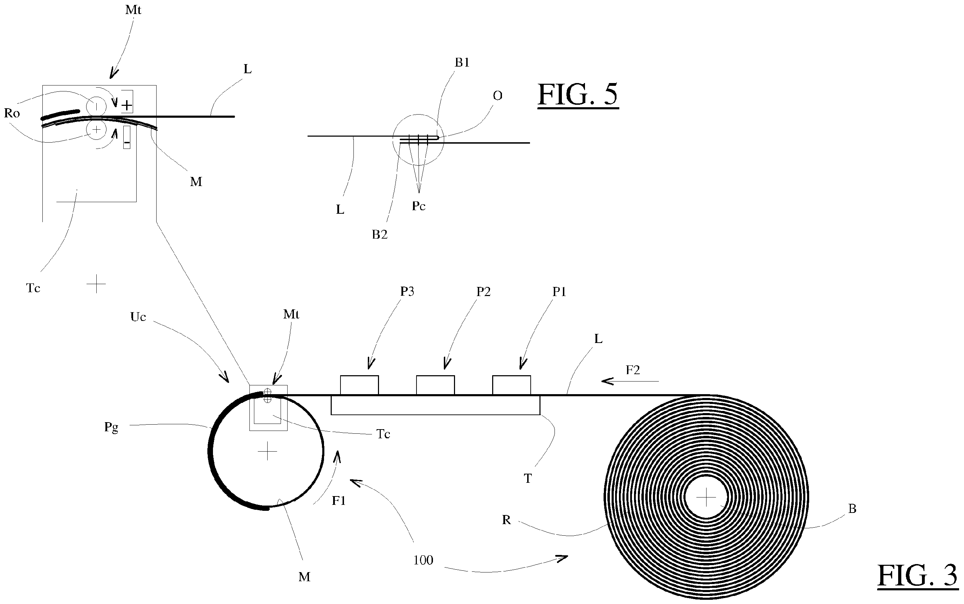

Sur la Fig. 3, la machine 100 destinée à la fabrication d'une gaine de ventilation, comprend une bobine B de stockage d'une relativement grande longueur de laize L, une unité de confection Uc de la gaine de ventilation, et éventuellement des équipements, P1, P2 et P3, destinés à perforer ladite laize, la marquer et y adjoindre des accessoires.

La laize L destinée à la fabrication de la gaine de ventilation est faite d'une bande de tissu de relativement grande longueur et qui est conditionnée sous la forme d'un rouleau R stocké par enroulement sur la bobine B. Le tissu est un tissu synthétique, par exemple un tissu fabriqué majoritairement en polyester. Il peut être étanche à l'air pour le transporter ou perméable à l'air pour le diffuser au travers du tissu.

La bande de tissu est déroulée de son rouleau R de stockage pour être acheminée vers l'unité de confection Uc.

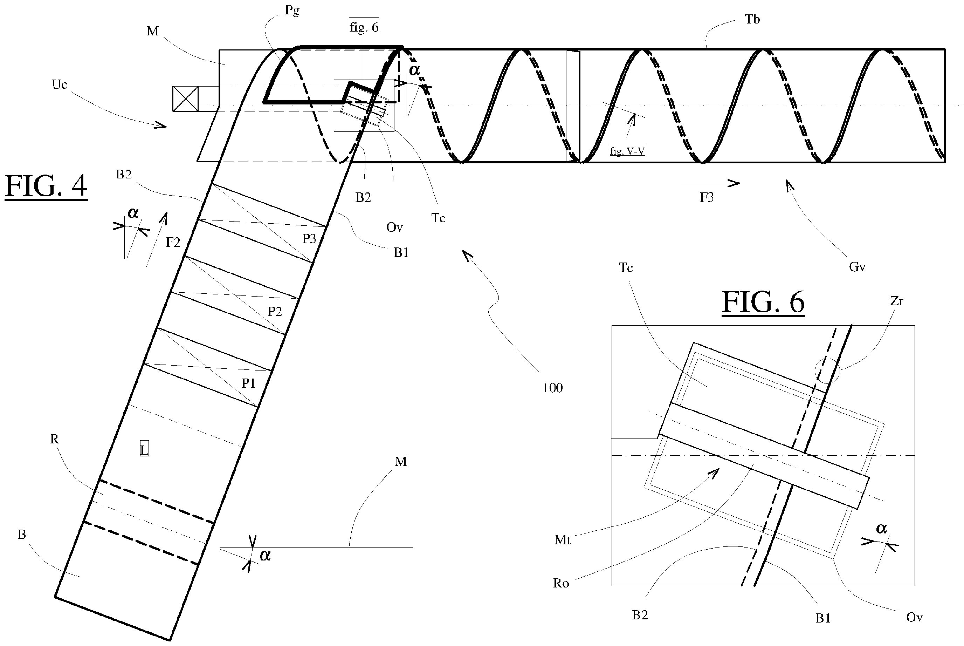

L'unité de confection Uc se compose, sur la Fig. 4, d'un mandrin M autour duquel il convient d'enrouler et de faire glisser la laize L autour de celui-ci et d'une tête de couture Tc. Le mandrin M présente une géométrie cylindrique. Il est formé d'un tube. Son diamètre extérieur détermine le diamètre intérieur de la gaine Gv à l'issue de sa confection.

L'axe de la bobine B est orienté avec un angle d'incidence « α » non nul par rapport à l'axe du mandrin M. Cet angle « α » est calculé en relation, notamment, avec le diamètre du mandrin M, la largeur de la laize L et la largeur d'une zone de recouvrement Zr de la laize pendant sa fabrication. Ainsi, la laize L peut être enroulée autour du mandrin M pour former la paroi tubulaire Tb en hélicoïde de la gaine de ventilation Gv. Sur la Fig. 3, la flèche F1 indique le sens d'enroulement de la laize L autour du mandrin M.

La tête de couture Tc est disposée dans le mandrin M et apparaît sur la Fig. 4, au travers de celle-ci dans une ouverture Ov créée au travers de la paroi constitutive dudit mandrin M. La tête de couture Te inclut, outre un mécanisme d'entraînement de va-et-vient d'une aiguille, un moyen de déplacement en translation Mt du tissu en cours de couture. La tête de couture Tc est de préférence disposée dans la partie supérieure du mandrin et préférentiellement à son sommet.

La tête de couture Tc est orientée de sorte que la direction de son moyen de déplacement en translation soit orientée suivant un angle égal à « α », par rapport à un plan perpendiculaire à l'axe du mandrin M.

Le moyen de déplacement en translation Mt du tissu comprend un crantage animé d'un mouvement alternatif qui dans un sens permet d'entraîner le tissu. Il peut être intégré dans la tête de couture Tc.

Dans l'invention et présentée sur les Figs. 3 et 6, le moyen de déplacement en translation Mt comprend une paire de rouleaux Ro contrarotatifs et entre lesquels le tissu et notamment la zone de recouvrement Zr est pincée et déplacée en translation pendant la rotation des deux rouleaux. Les deux sens opposés des deux rouleaux Ro sont indiqués par les flèches + et -. Les deux rouleaux sont entraînés par un moyen d'entraînement à rotation, tel qu'au moins un moteur électrique et dont le fonctionnement est synchronisé avec celui des aiguilles de la tête de couture Tc.

Pour conduire la laize L dans son premier demi-tour autour du mandrin M, l'unité de confection Uc peut être pourvue d'une paroi de guidage Pg qui forme en section un demi-cercle et qui est centré sur l'axe du mandrin M. Sur la Fig. 3, la paroi de guidage Pg débute au niveau de la tête de couture Tc, c'est-à-dire au niveau du quadrant supérieur du mandrin M et se prolonge du côté opposé à l'arrivée de la laize sur ledit mandrin et jusque pratiquement au point bas de celui-ci, c'est-à-dire au niveau de son quadrant inférieur.

La paroi de guidage Pg est située à faible distance de la paroi du mandrin B. Cette distance est limitée à quelques centimètres pour accompagner la laize L au plus près du mandrin M.

La confection d'une gaine de ventilation Gv se présente de la manière suivante et en référence à la Fig. 4 : la laize L préalablement fabriquée est enroulée sur une bobine B. L'axe de la bobine est orienté suivant une valeur angulaire de « α » par rapport à l'axe du mandrin M.

On engage l'extrémité libre de la laize L sur le mandrin M en conservant l'angle d'incidence α. La flèche F2 indique l'engagement de la laize L sur le mandrin M. L'angle « α » est ici mesuré entre la direction d'engagement et un plan perpendiculaire à l'axe du mandrin M. On poursuit l'engagement de la laize L en la passant sous la paroi de guidage Pg et en continuant son entourage pour qu'elle atteigne un tour complet autour dudit mandrin.

A ce stade, l'un des bords B2 de la laize L se trouve recouvert par superposition par l'autre bord B1 de la partie de la laize en cours d'abordage du mandrin M.

La tête de couture Tc est située à cet endroit. On met en fonctionnement la tête de couture Te. La laize L est alors tirée de la bobine B par l'intermédiaire du moyen de déplacement en translation Mt de la tête de couture Tc, puis la laize L est enroulée de manière continue autour du mandrin M par le travail de ce moyen de déplacement en translation Mt. La tête de couture Tc coud en continue les deux bords B1 et B2 superposés de la laize L. La gaine de ventilation Gv est ainsi fabriquée en continu. La flèche F3 indique la sortie en continu de la laize L à la sortie du mandrin M.

On peut dès lors fabriquer une gaine de ventilation Gv d'une longueur précise. On coupe une longueur particulière de gaine Gv. On coupe à angle droit chacune des extrémités de la gaine de ventilation. On équipe les deux extrémités de la gaine, de jonctions de raccordement, telles que virole, fermeture à glissière, ou d'un embout de fermeture.

Avantageusement dans l'invention, on utilise en référence à la Fig. 3, la partie déroulée et plane de la laize L située entre le tambour B et l'unité de confection Uc, pour réaliser un certain nombre d'opérations sur celle-ci. La partie déroulée repose sur une table plane T. On trouve ainsi un premier poste P1 de perforation et/ou de découpe de trous, un second poste P2 de marquage et un troisième poste P3 de fixation d'accessoires. La laize L circule à plat sur la table B et les trois postes sont disposés au-dessus de la table B pour agir sur la laize L. La laize L circule ainsi en continu sous les trois postes.

Le poste P1 comprend une tête de perforation laser conçue et programmée pour perforer ou découper un trou sur au moins une épaisseur du tissu de la laize L. Le rayon laser utilisé fixement par rapport à la laize est en mesure de réaliser des micro-perforations, destinées à la ventilation, dans le tissu. Le rayon laser peut-être mû d'un mouvement circulaire par rapport à la laize pour découper des trous de ventilation dans le tissu.

Le poste P2 comprend une imprimante pouvant imprimer un motif, tel que des textes, des dessins, des images, sur un support papier de type papier transfert. L'impression sur le papier transfert est ensuite déplacée sur la laize L et sous une presse chauffante disposée à cet endroit. La plaque chauffante est mise en contact un court instant avec le papier transfert et son motif est transféré sur la laize L. La plaque chauffante est éloignée de la laize L, puis le papier est retiré.

Le poste 3 comprend une tête de soudage par ultrasons conçue pour souder des accessoires sur la laize L. Les accessoires comprennent une plaque fabriquée dans un plastique thermosoudable. Un exemple d'accessoire est une plaque de suspension comprenant un passage qu'il convient d'enfiler sur une tige horizontale de suspension de la gaine de ventilation.

Sur la Fig. 4, la tête de soudage, non représentée, est disposée pour souder les accessoires disposés préférentiellement sur un bord B2 de la laize L et qui est opposé à son bord B 1 de couture afin que ces accessoires puissent passer à côté de la plaque de guidage Pg.

D'autres accessoires tels que des sangles de suspension, des crochets de suspension, peuvent être fixés sur la laize L pendant sa couture. Cette catégorie d'accessoires comprend une pièce de tissu ou une toile et qui est cousue par la tête de couture Te, au moment de l'assemblage des deux bords B 1 et B2 superposés de la laize L.

Sur la Fig. 5, deux bords B1 et B2 superposés de la laize L sont jointifs et disposés à recouvrement. Un ourlet O est formé sur le bord B1. Les deux bords B 1 et B2 sont réunis par l'intermédiaire d'un point de couture Pc. Le point de couture est, sur cette Fig. 5, un point droit à 3 fils.

Dans un mode de fabrication différent et non représenté de la gaine de ventilation, la tête de couture est remplacée par une tête de soudure par ultrasons. La tête de soudure inclut un moyen de déplacement en translation du tissu en cours de soudure et qui sert là encore à enrouler la laize autour du mandrin. La tête de soudure est conçue et programmée pour faire de la soudure en continu sur les deux bords superposés de la laize.

La tête de soudure comprend ainsi une paire de molettes contrarotatives respectivement sonotrode et enclume et entre lesquelles circule la zone de recouvrement du tissu. L'une des molettes est soumise à une vibration de fréquence ultrasonique par l'intermédiaire d'un convertisseur relié à une unité d'alimentation électrique.

Les deux molettes contrarotatives sont entraînées par un moyen d'entraînement à rotation et dont le fonctionnement est synchronisé avec celui du convertisseur.

Un cordon de colle peut être déposé en amont de la paire de molettes pendant le déplacement du tissu pour renforcer la liaison entre les bords à recouvrement dudit tissu. Le cordon de colle est déposé entre les deux bords à recouvrement. Il peut être déposé, par exemple à l'aide d'un pistolet à colle. On encolle ainsi les bords à recouvrement dudit tissu puis on les soude.

Dans un autre mode de fabrication différent et non représenté, on utilise une tête de collage pour mettre en oeuvre la liaison des bords à recouvrement du tissu.

La tête de collage inclut un moyen de déplacement en translation du tissu en cours de collage. Le moyen de déplacement en translation sert aussi à enrouler la laize autour du mandrin.

La tête de collage comprend ainsi une paire de molettes contrarotatives entre lesquelles le tissu et notamment la zone de recouvrement Zr est pincée et déplacée en translation pendant la rotation des deux rouleaux.

La tête de collage est conçue et programmée pour encoller en continu les deux bords superposés de la laize. On introduit un cordon de colle entre les bords à recouvrement, par exemple, à l'aide d'un pistolet à colle.

Les deux molettes contrarotatives sont entraînées par un moyen d'entraînement à rotation et dont le fonctionnement est synchronisé avec celui du pistolet à colle.

La gaine de ventilation est là encore ainsi fabriquée en continu.

Dans une variante de réalisation, non représentée, la gaine de ventilation est pourvue à intervalles réguliers d'arceaux semi-circulaires ou d'anneaux, attenants à la paroi tubulaire, pour la maintenir sensiblement dans une configuration circulaire en l'absence de débit d'air à l'intérieur de celle-ci. Les arceaux semi-circulaires ou les anneaux sont reliés à des accessoires de suspension de la gaine, tels que des crochets, des anneaux.

## Revendications

1. Procédé de confection d'une gaine souple de ventilation (Gv) dimensionnée pour être utilisée dans le domaine de la ventilation industrielle, le procédé mettant en oeuvre un mandrin (M) tubulaire cylindrique, le procédé consistant :
- à enrouler une laize (T) fabriquée en textile sur un tour autour du mandrin (M) avec un angle « α » d'incidence non nul en considérant la direction d'avancement de la laize (L) par rapport à un plan perpendiculaire à l'axe du mandrin, de sorte qu'un bord (B2) de la laize (L) se trouve recouvert par superposition par l'autre bord (B1) de la partie de la laize en cours d'abordage du mandrin (M),
- à entraîner en rotation ladite laize autour du mandrin (M),
- à unir mutuellement en continu les deux bords (B1) superposés par l'intermédiaire d'une tête de couture (Tc) équipée d'un moyen de déplacement en translation (Mt) du tissu de la laize,
**caractérisé en ce qu'**il consiste à utiliser le moyen de déplacement en translation (Mt) du tissu pour enrouler et faire glisser en continu la laize (L) autour du mandrin (M), le moyen de déplacement en translation (Mt) du tissu comprenant:
une paire de rouleaux (Ro) contrarotatifs etentre lesquels le tissu, et notamment la zone de recouvrement (Zr), est pincé et déplacé en translation pendant la rotation des deux rouleaux,
et **en ce qu'**il consiste à entraîner les deux rouleaux par l'intermédiaire d'un moyen d'entraînement à rotation, tel qu'au moins un moteur électrique et dont le fonctionnement est synchronisé avec celui des aiguilles de la tête de couture (Tc).

2. Procédé selon la revendication 1, **caractérisé en ce qu'**il consiste, préalablement à la confection de la gaine de ventilation (Gv), à perforer au moins une épaisseur du textile de la laize (L) ou à découper un trou dans au moins une épaisseur du textile de la laize (L).

3. Procédé selon l'une quelconque des revendications précédentes, **caractérisé en ce qu'**il consiste, préalablement à la confection de la gaine de ventilation (Gv), à réaliser un marquage sur la laize (L).

4. Procédé selon l'une quelconque des revendications précédentes, **caractérisé en ce qu'**il consiste, préalablement à sa confection, à fixer des accessoires sur la laize (L).

## Patentansprüche

1. Verfahren zur Anfertigung eines flexiblen Lüftungskanals (Gv), der dazu ausgelegt ist, im Bereich der industriellen Lüftung verwendet zu werden, wobei das Verfahren einen zylindrischen röhrenförmigen Dorn (M) einsetzt, wobei das Verfahren darin besteht:
- eine aus Textil hergestellte Bahn (T) über eine Windung um den Dorn (M) herum mit einem Auftreffwinkel "α" ungleich null unter Betrachtung der Vorschubrichtung der Bahn (L) in Bezug auf eine Ebene senkrecht zur Achse des Dorns zu wickeln, so dass ein Rand (B2) der Bahn (L) durch Überlagerung mit dem anderen Rand (B1) des gerade an den Dorn (M) angelegten Teils der Bahn überlappt wird,
- die Bahn um den Dorn (M) herum drehanzutreiben,
- die beiden überlagerten Ränder (B1) über einen Nähkopf (Tc), der mit einem Mittel zur translatorischen Verlagerung (Mt) des Stoffs der Bahn ausgestattet ist, kontinuierlich wechselseitig zu verbinden,
**dadurch gekennzeichnet, dass** es darin besteht, das Mittel zur translatorischen Verlagerung (Mt) des Stoffs zu verwenden, um die Bahn (L) kontinuierlich um den Dorn (M) herum zu wickeln und gleiten zu lassen, wobei das Mittel zur translatorischen Verlagerung (Mt) des Stoffs umfasst: ein Paar gegenläufige Walzen (Ro), zwischen denen der Stoff und insbesondere der Überlappungsbereich (Zr) geklemmt und während der Drehung der beiden Walzen translatorisch verlagert wird,
und dadurch, dass es darin besteht, die beiden Walzen über ein Drehantriebsmittel wie mindestens einen Elektromotor anzutreiben, dessen Betrieb mit dem der Nadeln des Nähkopfes (Tc) synchronisiert ist.

2. Verfahren nach Anspruch 1, **dadurch gekennzeichnet, dass** es darin besteht, vor dem Anfertigen des Lüftungskanals (Gv) mindestens eine Lage des Textils der Bahn (L) zu perforieren oder ein Loch in mindestens eine Lage des Textils der Bahn (L) zu schneiden.

3. Verfahren nach einem der vorhergehenden Ansprüche, **dadurch gekennzeichnet, dass** es darin besteht, vor dem Anfertigen des Lüftungskanals (Gv) eine Kennzeichnung auf der Bahn (L) auszuführen.

4. Verfahren nach einem der vorhergehenden Ansprüche, **dadurch gekennzeichnet, dass** es darin besteht, vor seiner Anfertigung Zubehörteile auf der Bahn (L) zu befestigen.

## Claims

1. Method for manufacturing a flexible air duct (Gv) designed for use in the field of industrial ventilation, said method implementing a cylindrical tubular core (M) and consisting of:
- winding a strip (T) made from fabric over a turn around the core (M) with a non-zero angle of incidence "α", considering the direction of travel of the strip (L) relative to a plane perpendicular to the axis of the core, so that one edge (B2) of the strip (L) is covered by overlapping of the other edge (B 1) of the part of the strip approaching the core (M),
- rotating said strip around the core (M),
- continuously joining the two overlapping edges (B1) together by means of a sewing head (Tc) provided with means (Mt) for translating the fabric of the strip,
**characterized in that** it consists of using the means (Mt) for translating the fabric to continuously wind and slid the strip (L) around the core (M), the means (Mt) for translating the fabric comprising:
a pair of counter-rotating rollers (Ro) between which the fabric and particularly the overlap zone (Zr) is gripped and translated during the rotation of the two rollers,
and **in that** it consists of driving the two rollers are by rotating driving means, such as at least one electric motor and the operation of which is synchronized with that of the needles of the sewing head (Tc).

2. Method according to claim 1, **characterized in that** it consists of, prior to manufacturing the air duct (Gv), punching at least one thickness of the fabric of the strip (L) or cutting a hole in at least one thickness of the fabric of the strip (L).

3. Method according any one of the previous claims, **characterized in that** it consists of, prior to manufacturing the air duct (Gv), marking the strip (L).

4. Method according any one of the previous claims, **characterized in that** it consists of, prior to the manufacturing thereof, fastening accessories to the strip (L).
